# EUROPEAN PATENT SPECIFICATION

(11) **EP 3 331 813 B1**
(45) Date of publication and mention of the grant of the patent: **12.06.2019**
(21) Application number: 16759867.1
(22) Date of filing: 03.08.2016
(51) Int. Cl.: B67D 1/12, B67D 1/00

(54) **DEVICE FOR THE MIXING AND DISPENSING OF DRINKS**
VORRICHTUNG ZUR MISCHUNG UND ABGABE VON GETRÄNKEN
DISPOSITIF DE MÉLANGE ET DE DISTRIBUTION DE BOISSONS

(30) Priority: 07.08.2015 IT UB20153021
(43) Date of publication of application: 13.06.2018
(73) Proprietor: Marchetti, Roberto, 41125 Modena (IT)
(72) Inventor: ALBERINI, Viliam, 42122 Reggio Emilia (IT); ROLLI, Stefano, 42122 Reggio Emilia (IT)
(74) Representative: Zoli, Filippo
(86) International application number: PCT/IB2016/054691
(87) International publication number: WO 2017/025866

(56) References cited:
- WO-A1-00/47058
- WO-A1-2014/036098

## Description

### Technical Field

The present invention relates to a device for the mixing of fluids.

### Background Art

To date several types of device are known for the mixing of fluids, e.g., used to prepare drinks, where syrup or juice concentrate has to be mixed with a diluent, e.g., water, in order to obtain the desired drink.

These devices generally have a first supply line of a first fluid, e.g., water, along which are arranged first valve means adapted to control the flow rate of the first fluid itself, a second supply line of a second fluid, e.g., syrup or juice, along which are arranged second valve means adapted to control the flow rate of the second fluid itself, and mixing means for mixing the two fluids.

In order to obtain a drink flavor which is as reproducible as possible over time, the ratio between the dispensed fluids must be maintained substantially constant.

Some devices for the mixing of fluids are known from US 5868279, US 2004/0084475 and US 6450369, to name just a few.

In particular, US 5868279 provides that along each of the supply lines be arranged relative normally-open valves and that downstream of these a flow meter be present adapted to send a signal to relative control means programmed to close the valves when the detected flow rate exceeds a predefined value. Once the desired ratio between the fluids has been found to have been complied with, the control means reopen the previously closed valves.

The device described by US 5868279 then performs a discrete type of control of the flow rate of the fluids, i.e., the moment the flow rate of one of the two fluids reaches the relative reference value, its dispensing is interrupted while that of the other fluid is kept active until the ratio between them has reached the required value.

The flow rate of the fluids is therefore adjusted by acting on the corresponding valves, closing them.

US 2004/0084475 describes a system for dispensing drinks in which a measurement is taken of the flow rate of the syrup, by means of a pressure sensor and a temperature sensor, and of the flow rate of the water, by means of a flow rate sensor, the signals of which are sent to a control device adapted to operate the relative valves in order to obtain the required ratio between the flow rates of the dispensed fluids.

In particular, the control device performs a modulation of the valves of the Pulse Width Modulation type (PWM) which varies the current flowing inside the valve coils and changes the magnetic field and the position of the valve shutter according to the flow rates detected and the preset ratio.

US 6450369 describes a device for dispensing drinks which provides for a single piston placed between the fluid dispensing lines and the mixing means and adapted to regulate the dispensing of both fluids.

In particular, such device provides for the detection of the flow rate of both fluids and the feedback control of the water flow rate, by means of the aforementioned piston, according to the measured flow rate of the syrup in order to obtain a predefined ratio between them.

These known devices have some drawbacks.

They do not in fact allow a precise and rapid feedback control of the fluid flow rates. More in detail, the flow rate control performed by adjusting the opening time of the relative valves does not allow, also because of the response times of the relevant shutters, to carry out an effective feedback control of the flow rate of the fluids.

This limit of the devices of known type generally translates into low reproducibility over time of the flavor of the dispensed drinks, which can therefore affect appreciation by consumers.

Generally, the bigger the operating pressure and the viscosity of the dispensed fluids, the more evident this drawback is.

To this must be added the fact that the devices of known type have low if not zero capacity to regulate the flow rate of the two fluids and to maintain the desired mixing ratio with the variation in pressure and temperature of the fluids themselves.

### Description of the Invention

The main aim of the present invention is to provide a device for the mixing of fluids which allows effectively performing the feedback control of the flow rate of the fluids.

Within this aim, one object of the present invention is to control, in a substantially continuous way, the flow rate of the dispensed fluids and their ratio.

Another object of the present invention is to reduce the head losses in the fluids during the crossing of the valve means, in order to curb the turbulences and loss of carbonation when the fluids are gassed.

Yet another object is to provide valve means that have quick and precise actuation and at the same time to avoid any sugar component contained in the syrup resulting over time in the formation of residues that hinder the shifting of the relative shutters.

A further object of the present invention is to provide a device for the mixing of fluids which allows:
- setting the flow rate of the fluids within a predetermined range;
- maintaining the flow rate unchanged at the different pressures imposed by the supply system positioned upstream of the device;
- maintaining and re-proposing the drink as fluid mixture even when the temperature changes.

Another object of the present invention is to provide a device for the mixing of fluids which allows overcoming the mentioned drawbacks of the prior art within the ambit of a simple, rational, easy, effective to use and affordable solution.

The above mentioned objects are achieved by the present device for the mixing of fluids according to claim 1.

### Brief Description of the Drawings

Other characteristics and advantages of the present invention will become better evident from the description of a preferred, but not exclusive, embodiment of a device for the mixing of fluids, illustrated by way of an indicative, but nonlimiting, example in the accompanying drawings, wherein:

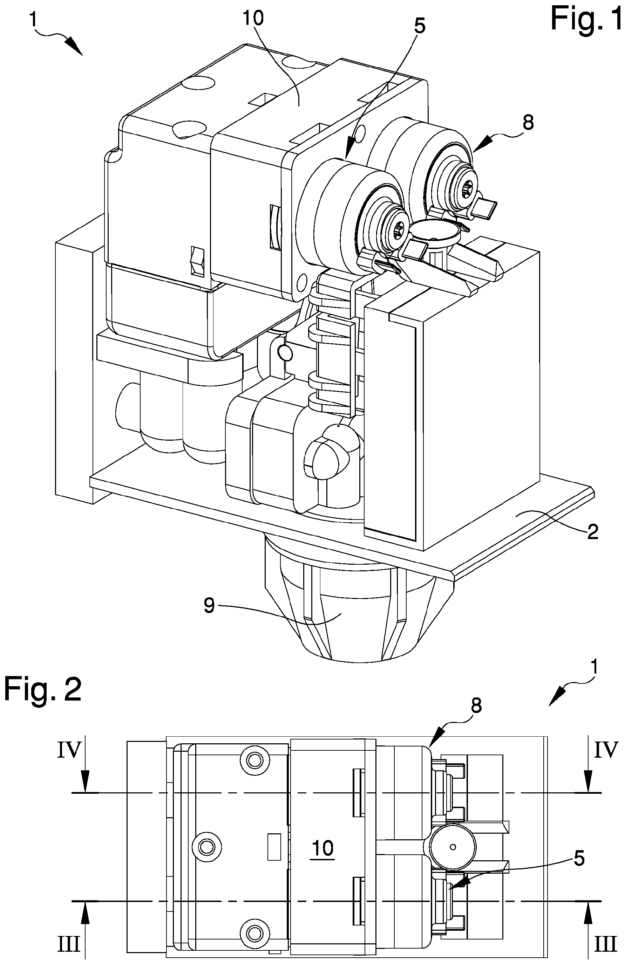

Figure 1 is an axonometric view of the device according to the invention;
Figure 2 is a top view of the device according to the invention;

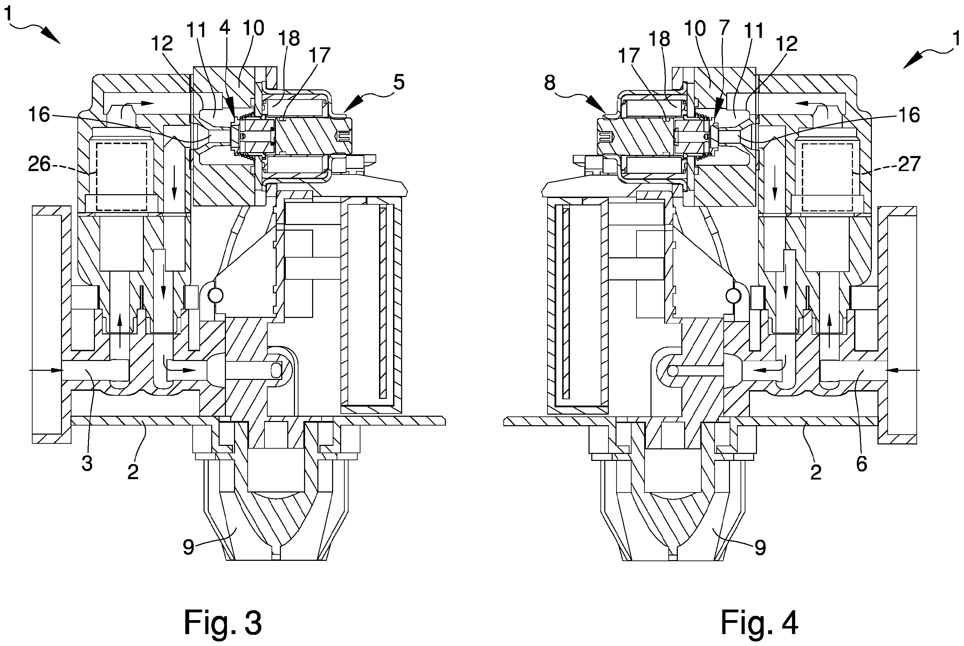

Figure 3 is a sectional view along the plane III - III of Figure 2;
Figure 4 is a sectional view along the plane IV - IV of Figure 2;

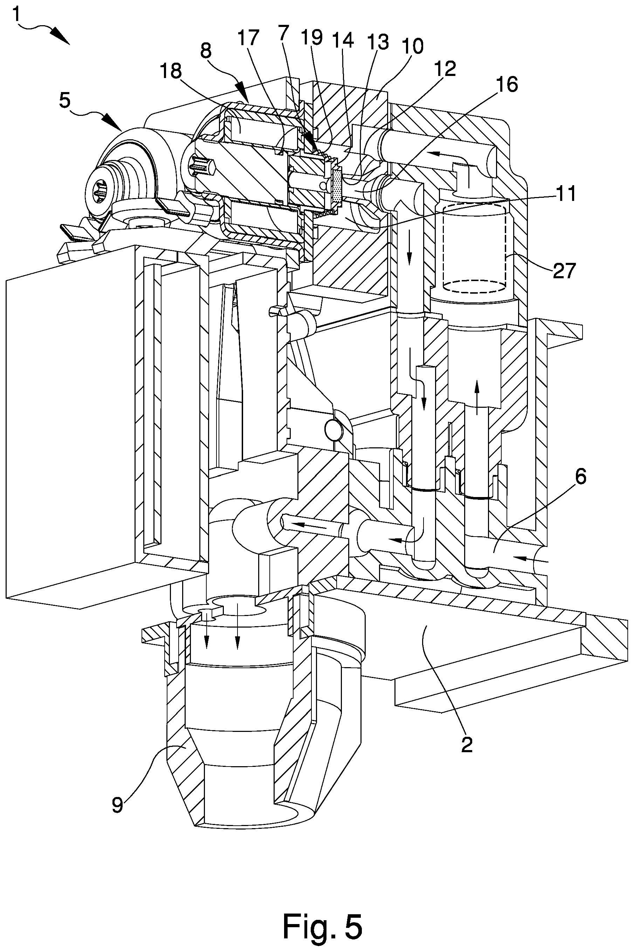

Figure 5 is an axonometric view, from another angle and partially broken, of the device according to the invention;
Figures 6 and 7 are sectional views, on an enlarged scale, illustrating a first embodiment of the valve means in the device according to the invention;
Figures 8 and 9 are axonometric views, on an enlarged scale and partially broken, illustrating a second embodiment of the valve means present in the device according to the invention;
Figure 10 is a diagram illustrating the control logic of the device according to the invention;
Figure 11 is a graph illustrating a possible sequence of the opening and closure cycles of the valve means of the device according to the invention.

### Embodiments of the Invention

With particular reference to such figures, globally indicated by reference numeral is 1 a device for the mixing of fluids, in particular for the production of drinks or the like.

The device 1 comprises a base frame 2 mountable, e.g., inside a drink dispensing machine not shown in detail in the illustrations because it is of known type.

On the base frame 2 is mounted a series of components assembled together so as to define:
- at least a first supply line 3 of a first fluid along which at least first valve means 4 are arranged, there being provided first control means 5 adapted to command the opening/closure of the first valve means 4 to regulate the flow rate of the first fluid itself;
- at least a second supply line 6 of a second fluid along which at least second valve means 7 are arranged, there being provided second control means 8 adapted to command the opening/closure of the second valve means 7 to regulate the flow rate of the second fluid itself; and
- mixing means 9 of the first fluid and of the second fluid communicating with the first supply line 3 and the second supply line 6. The mixing means 9 consist e.g. in a common outlet mouth where both the first supply line 3 and the second supply line 6 end up.

The first fluid consists, e.g., of water, if necessary with the addition of carbon dioxide.

The second fluid consists, e.g., of a syrup or a juice concentrate which, when mixed with water, form a drink.

At least one of the first valve means 4 and second valve means 7, preferably both, comprises a body 10 which defines a receiving chamber 11 of the relative fluid having at least one inlet port 12 and at least one outlet port 13.

Inside of the receiving chamber 11 is arranged at least one shutter 14 movable to put into communication with/isolate from each other the inlet port 12 and the outlet port 13.

The shutter 14 has an abutment surface with a substantially annular shape and adapted to rest on the body 10 at the outlet port 13 to obstruct the flow of the fluid.

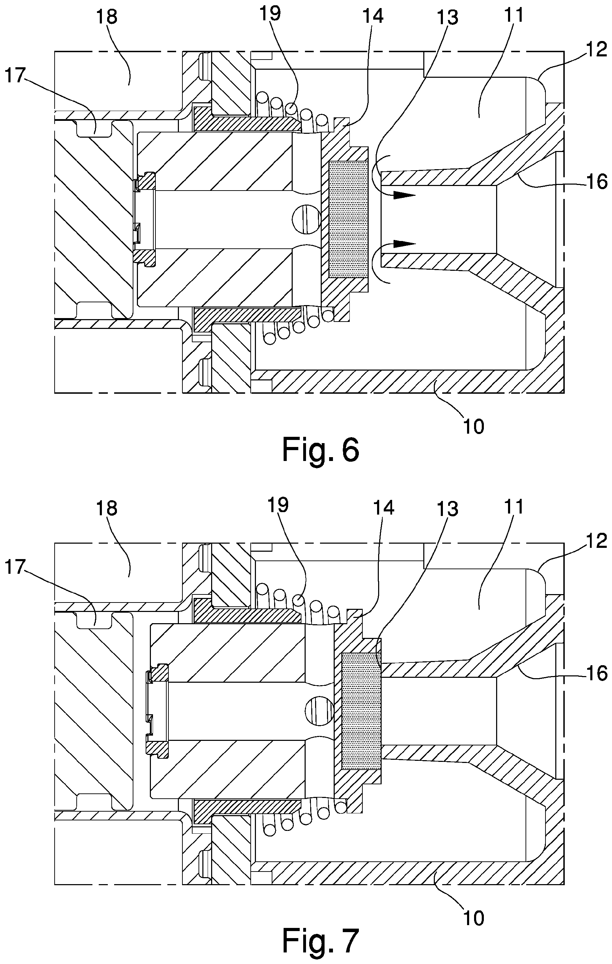

In a first embodiment of the valve means 4, 7 shown in detail in Figures 6 and 7, the outlet port 13 has a substantially circular shape and the abutment surface is adapted to rest on the body 10 at the peripheral edge of the outlet port itself.

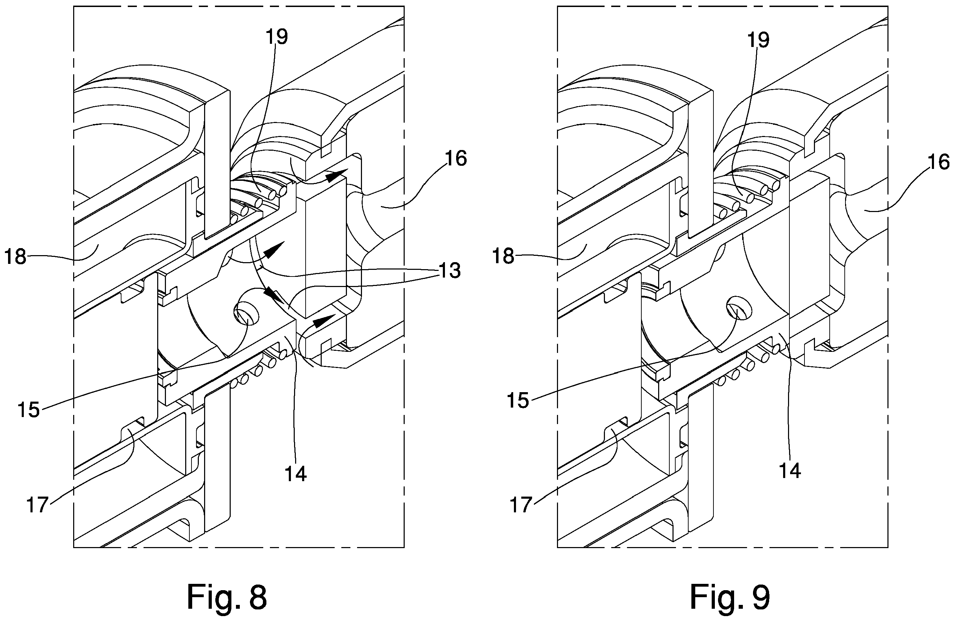

In a second embodiment of the valve means 4, 7 shown in detail in Figures 8 and 9, instead, the outlet port 13 has a substantially annular shape and is defined, e.g., by a series of curvilinear slots arranged precisely in a loop.

In this second embodiment, the abutment surface of the shutter 14 is adapted to abut at the outlet port itself and, usefully, the shutter 14 is cup-shaped, is internally hollow and has at least one opening 15 for the flow therethrough of the relative fluid; this way, the flow of the relative fluid is made easier through the valve means 4, 7 when the shutter 14 is moved away from the outlet port 13.

Advantageously, the body 10 defines at least one outlet channel 16 for the fluid which extends from the outlet port 13 and which is substantially shaped as a Venturi tube.

At least one of the first valve means 4 and the second valve means 7, preferably both, comprises at least a sealing element 17 adapted to separate in a hydraulically-operated manner the relative control means 5, 8 from the relative receiving chamber 11, thus preventing the fluids from flowing out of the receiving chamber 11 and wetting the control means.

In this regard it is specified that the control means 5, 8 are of the electronic type and must therefore be kept dry.

In particular, at least one of the first control means 5 and the second control means 8, preferably both, comprises at least one command coil 18.

Thanks to the command coil 18, the control means 5, 8 are commandable between an active configuration, wherein they are able to generate a magnetic field to attract the shutter 14 towards the opening position, and a rest configuration, wherein they interrupt the magnetic field and comprise return means 19, of the type of a spring or the like, adapted to counteract the shift of the shutter 14 itself towards the relative opening position.

The device 1 comprises driving means 20 for driving at least one of the first control means 5 and the second control means 8 and adapted to maintain at least a predefined ratio between the flow rate of the first fluid and the flow rate of the second fluid along the relative supply lines 3, 6.

The driving means 20 comprise generation means 21, 22 of an impulsive driving signal 23 by pulses which are adapted to open the first valve means 4 and/or the second valve means 7 for an impulsive opening time T-on and to close the first valve means 4 and/or the second valve means 7 for an impulsive closure time T-off, wherein the ratio between the impulsive opening time T-on and the impulsive closure time T-off for each pulse is constant and the pulses have a variable repetition frequency.

At every opening and closure cycle of the valve means 4, 7, in practice, the duration of the impulsive opening time T-on and the duration of the impulsive closure time T-off may change but always in a proportional way.

In other words, if the impulsive opening time T-on changes, then the impulsive closure time T-off also changes proportionally.

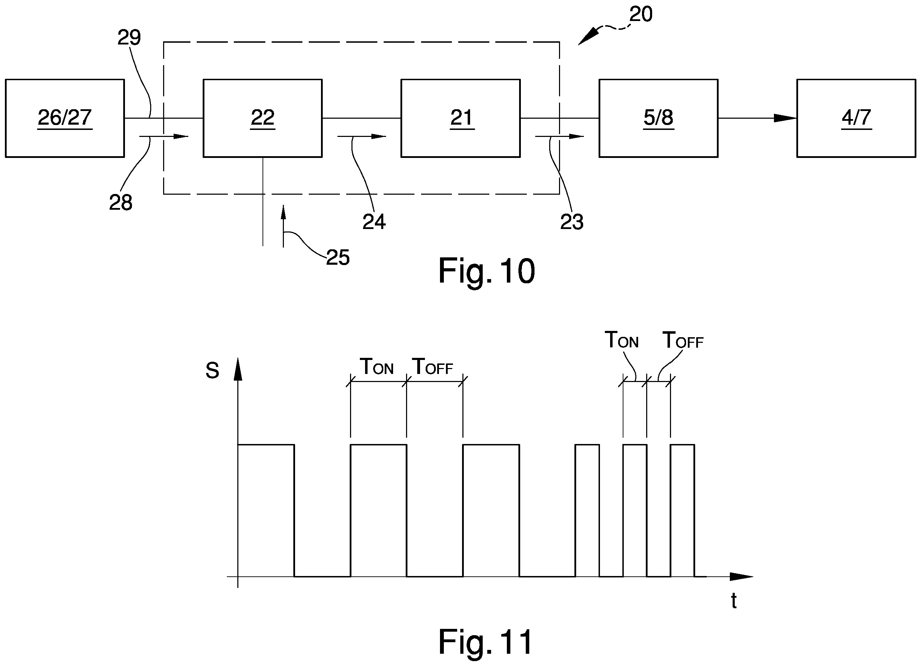

Such pattern is graphically shown in Figure 11, wherein it can be seen that, in a first operating phase, the pulses are characterized by rather long impulsive opening times T-on and impulsive closure times T-off repeated with a rather low repetition frequency, while, in a second operating phase, the pulses are characterized by rather short impulsive opening times T-on and impulsive closure times T-off repeated with a rather low repetition frequency; both in the first operating phase and in the second operating phase, nevertheless, the T-on/T-off ratio is fixed and unchanged.

The impulsive driving signal 23 is usefully made up of a signal of the PFM (Pulse Frequency Modulation) type, in which in practice the duration of the pulses, i.e., precisely intended as T-on/T-off ratio, is fixed and the repetition frequency varies.

The PFM frequency is determined by the system essentially on the basis of the combined action of a feedback integral control error and a reference feed-forward control.

In particular, the generation means 21, 22 comprise at least a pulse (PFM) frequency modulation unit 21 adapted to receive at input a predetermined control signal 24 to be modulated and to return at output the impulsive driving signal 23.

The generation means 21, 22 also comprise at least a control circuit 22 connected upstream of the frequency modulation unit 21, adapted to receive at input at least a reference flow value 25, provided by a management unit, and adapted to generate at output the control signal 24.

The driving means 20 also comprise at least one flow rate sensor 26, 27 arranged along the first supply line 3 and/or the second supply line 6, respectively upstream of the first valve means 4 and/or of the second valve means 7, which is adapted to measure at least one flow value 28 corresponding to the flow rate of the fluids in the supply lines 3, 6.

The control circuit 22 comprises at least one feedback line 29 connected to the flow rate sensor 26, 27, which allows the control circuit 22 to receive at input not only the reference flow value 25 but also the flow value 28 measured by the flow rate sensor 26, 27.

The control circuit 22 compares the reference flow rate 25 and the flow value 28 measured by the flow rate sensor 26, 27, and calculates the control error as the difference between the two and, if necessary, integrates it by means of an integrator.

From the integral control error and from the reference flow value 25, which is nothing more than a feed-forward control, the control circuit 22 provides the control signal 24 to be modulated at output.

The control signal 24 is received by the frequency modulation unit 21 which returns at output the impulsive driving signal 23 having the pulse frequency PFM which depends proportionally on the magnitude of the control signal 24.

The impulsive driving signal 23 thus obtained commands the opening and the closure of the valve means 4, 7.

In this respect, it should be noticed that the command coil 18 of the control means 5, 8 is operatively connected to the output of the generation means 21, 22 and to at least one of the first and second valve means 4, 7.

The command coil 18 is also adapted to actuate at least one of the first and the second valve means 4, 7 at each pulse of the impulsive driving signal 23.

Advantageously, there are two command coils 18, one for the first control means 5 and one for the second control means 8.

Similarly, there are two flow rate sensors 26, 27, of which a first flow rate sensor 26 is arranged along the first supply line 3 and a second flow rate sensor 27 is arranged along the second supply line 6.

The flow rate sensors 26, 27 are preferably of the type without movement.

## Claims

1. Device (1) for the mixing of fluids comprising:
- at least a first supply line (3) of a first fluid;
- at least first valve means (4) arranged along said first supply line (3);
- first control means (5) able to command the opening/closure of said first valve means (4) to regulate the flow rate of the first fluid itself;
- at least a second supply line (6) of a second fluid;
- at least second valve means (7) arranged along said second supply line (6);
- second control means (8) able to command the opening/closure of said second valve means (7) to regulate the flow rate of the second fluid itself;
- driving means (20) of at least one of said first and second control means (5, 8) configured to maintain at least a predefined ratio between the flow rate of said first fluid and the flow rate of said second fluid;
- mixing means (9) of said first and second fluid communicating with said first and said second supply line (3, 6);
wherein said driving means (20) comprise generation means (21, 22) of an impulsive driving signal (23) by pulses configured to open said first valve means (4) and/or said second valve means (7) for an impulsive opening time (Ton) and to close said first valve means (4) and/or said second valve means (7) for an impulsive closure time (T-off),
**characterised in that** the ratio between said impulsive opening time (T-on) and said impulsive closure time (T-off) for each of said pulses is constant and said pulses have a variable repetition frequency.

2. Device (1) according to claim 1, **characterized in that** said impulsive driving signal (23) is made up of a signal of the PFM (Pulse Frequency Modulation) type.

3. Device (1) according to claim 2, **characterized in that** said generation means (21, 22) comprise at least a pulse (PFM) frequency modulation unit (21) able to receive at input a predetermined control signal (24) to be modulated and to return at output said impulsive driving signal (23).

4. Device (1) according to claim 3, **characterized in that** said generation means (21, 22) comprise at least a control circuit (22) connected upstream of said frequency modulation unit (21), able to receive at input at least a reference flow value (25) and able to generate at output said control signal (24).

5. Device (1) according to claim 4, **characterized in that** said driving means (20) comprise at least one flow rate sensor (26, 27) arranged along said first supply line (3) and/or said second supply line (6), respectively upstream of said first valve means (4) and/or of said second valve means (7), able to measure at least one flow value (28), and **in that** said control circuit (22) comprises at least one feedback line (29) connected to said flow rate sensor (26, 27).

6. Device (1) according to claim 5, **characterized in that** said flow rate sensor (26, 27) is of the type without movement.

7. Device (1) according to one or more of the preceding claims, **characterized in that** at least one of said first and second control means (5, 8) comprises at least one command coil (18) operatively connected to the output of said generation means (21, 22) and to at least one of said first and second valve means (4, 7), said at least one command coil (18) being able to actuate one of said first and second valve means (4, 7) at each pulse of said impulsive driving signal (23).

8. Device (1) according to one or more of the preceding claims, **characterized in that** at least one of said first and second valve means (4, 7) comprises a body (10) which defines a receiving chamber (11) of the relative fluid having at least one inlet port (12) and at least one outlet port (13), and **in that** it comprises at least one shutter (14) movable to put into communication with each other/isolate said inlet port (12) and said outlet port (13).

9. Device (1) according to claim 8, **characterized in that** said shutter (14) has an abutment surface with a substantially annular shape and able to rest on said body (10) at said outlet port (13) to obstruct the flow of the fluid.

10. Device (1) according to claim 9, **characterized in that** said outlet port (13) has a substantially circular shape and **in that** said abutment surface is able to rest on said body (10) at the peripheral edge of the outlet port itself (13).

11. Device (1) according to claim 9, **characterized in that** said outlet port (13) has a substantially annular shape, said abutment surface being able to abut at the outlet port itself (13), and **in that** said shutter (14) is internally hollow and has at least one opening (15) for the flow therethrough of the relative fluid.

12. Device (1) according to one or more of the preceding claims from 8 to 11, **characterized in that** said body (10) defines at least one outlet channel (16) for the fluid which extends from said outlet port (13) and which is substantially shaped as a Venturi tube.

13. Device (1) according to one or more of the preceding claims from 8 to 12, **characterized in that** at least one of said first and second valve means (4, 7) comprises at least a sealing element (17) able to separate in a hydraulically-operated manner the relative control means (5, 8) from the relative receiving chamber (11).

14. Device (1) according to one or more of the preceding claims from 8 to 13, **characterized in that** said control means (5, 8) is configured to be commanded between an active configuration, wherein they are able to generate a magnetic field to attract said shutter (14) towards the opening position, and a rest configuration, wherein they interrupt said magnetic field and comprise return means (19) able to counteract the shift of the shutter itself (14) towards the relative opening position.

## Patentansprüche

1. Vorrichtung (1) für das Mischen von Fluiden, umfassend:
- mindestens eine erste Zufuhrleitung (3) eines ersten Fluids;
- mindestens erste Ventilmittel (4), die entlang der ersten Zufuhrleitung (3) angeordnet sind;
- erste Steuerungsmittel (5), die geeignet sind, das Öffnen/Schließen der ersten Ventilmittel (4) zu befehlen, um die Flussrate des ersten Fluids selbst zu regulieren;
- mindestens eine zweite Zufuhrleitung (6) eines zweiten Fluids;
- mindestens zweite Ventilmittel (7), die entlang der zweiten Zufuhrleitung (6) angeordnet sind;
- zweite Steuerungsmittel (8), die geeignet sind, das Öffnen/Schließen der zweiten Ventilmittel (7) zu befehlen, um die Flussrate des zweiten Fluids selbst zu regulieren;
- Antriebsmittel (20) mindestens einer der ersten und zweiten Steuerungsmittel (5, 8), die eingerichtet sind, um mindestens ein vordefiniertes Verhältnis zwischen der Flussrate des ersten Fluids und der Flussrate des zweiten Fluids aufrechtzuerhalten;
- Mischmittel (9) des ersten und zweiten Fluids, die mit der ersten und zweiten Zufuhrleitung (3, 6) in Verbindung stehen;
wobei die Antriebsmittel (20) Erzeugungsmittel (21, 22) eines impulsiven Antriebssignals (23) durch Impulse umfassen, die eingerichtet sind, um die ersten Ventilmittel (4) und/oder die zweiten Ventilmittel (7) für eine impulsive Öffnungszeit (T-on) zu öffnen und die ersten Ventilmittel (4) und/oder die zweiten Ventilmittel (7) für eine impulsive Schließungszeit (T-off) zu schließen,
**dadurch gekennzeichnet, dass** das Verhältnis zwischen der impulsiven Öffnungszeit (T-on) und der impulsiven Schließungszeit (T-off) für jeden der Impulse konstant ist und die Impulse eine variable Wiederholungsfrequenz aufweisen.

2. Vorrichtung (1) nach Anspruch 1, **dadurch gekennzeichnet, dass** das impulsive Antriebssignal (23) aus einem Signal des PFM (Pulse Frequency Modulation)-Typs besteht.

3. Vorrichtung (1) nach Anspruch 2, **dadurch gekennzeichnet, dass** die Erzeugungsmittel (21, 22) mindestens eine Impuls (PFM) Frequenzmodulationseinheit (21) umfassen, die am Eingang ein vorbestimmtes zu modulierendes Steuersignal (24) empfangen und am Ausgang das impulsive Antriebssignal (23) zurückgeben kann.

4. Vorrichtung (1) nach Anspruch 3, **dadurch gekennzeichnet, dass** die Erzeugungsmittel (21, 22) mindestens einen Steuerschaltkreis (22) umfassen, der stromaufwärts der Frequenzmodulationseinheit (21) verbunden ist, und geeignet ist, am Eingang mindestens einen Referenzflusswert (25) zu empfangen und geeignet ist, am Ausgang das Steuersignal (24) zu erzeugen.

5. Vorrichtung (1) nach Anspruch 4, **dadurch gekennzeichnet, dass** die Antriebsmittel (20) mindestens einen Flussratensensor (26, 27) umfassen, der entlang der ersten Zufuhrleitung (3) und/oder der zweiten Zufuhrleitung (6), jeweils stromaufwärts der ersten Ventilmittel(4) und/oder der zweiten Ventilmittel (7), angeordnet sind und geeignet sind, mindestens einen Flusswert (28) zu messen, und dadurch, dass der Steuerschaltkreis (22) mindestens eine Rückführungsleitung (29) umfasst, die mit dem Flussratensensor (26, 27) verbunden ist.

6. Vorrichtung (1) nach Anspruch 5, **dadurch gekennzeichnet, dass** der Flussratensensor (26, 27) vom Typ ohne Bewegung ist.

7. Vorrichtung (1) nach einem oder mehreren der vorhergehenden Ansprüche, **dadurch gekennzeichnet, dass** mindestens eines der ersten und der zweiten Steuerungsmittel (5,8) mindestens eine Befehlsspule (18) umfasst, die betriebsfähig mit dem Ausgang der Erzeugungsmittel (21, 22) und mit mindestens einer der ersten und zweiten Ventilmittel (4, 7) verbunden ist; wobei die mindestens eine Befehlsspule (18) geeignet ist, eine der ersten und der zweiten Ventilmittel (4, 7) bei jedem Impuls des impulsiven Antriebssignals (23) zu betätigen.

8. Vorrichtung (1) nach einem oder mehreren der vorhergehenden Ansprüche, **dadurch gekennzeichnet, dass** mindestens eine der ersten und der zweiten Ventilmittel (4, 7) einen Körper (10) umfasst, der eine Aufnahmekammer (11)des jeweiligen Fluids definiert, die mindestens eine Einlassöffnung (12) und mindestens eine Auslassöffnung (13) aufweist, und dadurch, dass sie mindestens einen Schließer (14) umfasst, der bewegbar ist, um die Einlassöffnung (12) und die Auslassöffnung (13) miteinander in Verbindung zu bringen/voneinander zu isolieren.

9. Vorrichtung (1) nach Anspruch 8, **dadurch gekennzeichnet, dass** der Schließer (14) eine Anlagefläche mit einer im Wesentlichen ringförmigen Form aufweist, die geeignet ist, an dem Körper (10) an der Auslassöffnung (13) anzuliegen, um den Fluss des Fluids zu blockieren.

10. Vorrichtung (1) nach Anspruch 9, **dadurch gekennzeichnet, dass** die Auslassöffnung (13) eine im Wesentlichen kreisförmige Form aufweist, und dadurch, dass die Anlagefläche an dem Körper (10) an dem Umfangsrand der Auslassöffnung (13) selbst anliegen kann.

11. Vorrichtung (1) nach Anspruch 9, **dadurch gekennzeichnet, dass** die Auslassöffnung (13) eine im Wesentlichen ringförmige Form aufweist, wobei die Anlagefläche geeignet ist, an der Auslassöffnung (13) selbst anzuliegen, und dadurch, dass der Schließer (14) im Inneren hohl ist und mindestens eine Öffnung (15) für den Fluss des jeweiligen Fluids dort hindurch aufweist.

12. Vorrichtung (1) nach einem oder mehreren der vorhergehenden Ansprüche von 8 bis 11, **dadurch gekennzeichnet, dass** der Körper (10) mindestens einen Auslasskanal (16) für das Fluid definiert, der sich von der Auslassöffnung (13) erstreckt und der im Wesentlichen als ein VenturiRohr geformt ist.

13. Vorrichtung (1) nach einem oder mehreren der vorhergehenden Ansprüche von 8 bis 12, **dadurch gekennzeichnet, dass** mindestens eine der ersten und zweiten Ventilmittel (4, 7) mindestens ein Abdichtungselement (17) umfasst, das geeignet ist, in einer hydraulisch betriebenen Weise die jeweiligen Steuerungsmittel (5, 8) von der jeweiligen Aufnahmekammer (11) zu trennen.

14. Vorrichtung (1) nach einem oder mehreren der vorhergehenden Ansprüche von 8 bis 13, **dadurch gekennzeichnet, dass** die Steuerungsmittel (5, 8) eingerichtet sind, um zwischen einer aktiven Konfiguration, wobei sie geeignet sind, ein Magnetfeld zu erzeugen, um den Schließer (14) in Richtung der Öffnungsposition anzuziehen, und einer Ruhekonfiguration befohlen zu werden, wobei sie das Magnetfeld unterbrechen und Rückführungsmittel (19) umfassen, die geeignet sind, der Verschiebung des Schließers (14) selbst in Richtung der jeweiligen Öffnungsposition entgegenzuwirken.

## Revendications

1. Dispositif (1) pour le mélange de fluides comprenant :
- au moins une première conduite d'alimentation (3) d'un premier fluide ;
- au moins des premiers moyens de vanne (4) agencés le long de ladite première conduite d'alimentation (3) ;
- des premiers moyens de commande (5) capables d'ordonner l'ouverture/la fermeture desdits premiers moyens de vanne (4) pour réguler le débit du premier fluide lui-même ;
- au moins une seconde conduite d'alimentation (6) d'un second fluide ;
- au moins des seconds moyens de vanne (7) agencés le long de ladite seconde conduite d'alimentation (6) ;
- des seconds moyens de commande (8) capables d'ordonner l'ouverture/la fermeture desdits seconds moyens de vanne (7) pour réguler le débit du second fluide lui-même;
- des moyens de pilotage (20) d'au moins l'un desdits premiers et seconds moyens de commande (5, 8) configurés pour conserver au moins un rapport prédéfini entre le débit dudit premier fluide et le débit dudit second fluide ;
- des moyens de mélange (9) desdits premier et second fluides communiquant avec ladite première et ladite seconde conduite d'alimentation (3, 6) ;
dans lequel lesdits moyens de pilotage (20) comprennent des moyens de génération (21, 22) d'un signal de pilotage impulsif (23) par des impulsions configurées pour ouvrir lesdits premiers moyens de vanne (4) et/ou lesdits seconds moyens de vanne (7) pendant un temps d'ouverture impulsive (T-on) et pour fermer lesdits premiers moyens de vanne (4) et/ou lesdits seconds moyens de vanne (7) pendant un temps de fermeture impulsive (T-off),
**caractérisé en ce que** le rapport entre ledit temps d'ouverture impulsive (T-on) et ledit temps de fermeture impulsive (T-off) pour chacune desdites impulsions est constant et lesdites impulsions ont une fréquence de répétition variable.

2. Dispositif (1) selon la revendication 1, **caractérisé en ce que** ledit signal de pilotage impulsif (23) est constitué d'un signal du type PFM (modulation d'impulsion en fréquence).

3. Dispositif (1) selon la revendication 2, **caractérisé en ce que** lesdits moyens de génération (21, 22) comprennent au moins une unité de modulation d'impulsion en fréquence (PFM) (21) capable de recevoir en entrée un signal de commande prédéterminé (24) à moduler et de renvoyer en sortie ledit signal de pilotage impulsif (23).

4. Dispositif (1) selon la revendication 3, **caractérisé en ce que** lesdits moyens de génération (21, 22) comprennent au moins un circuit de commande (22) connecté en amont de ladite unité de modulation de fréquence (21), capable de recevoir en entrée au moins une valeur d'écoulement de référence (25) et capable de générer en sortie ledit signal de commande (24).

5. Dispositif (1) selon la revendication 4, **caractérisé en ce que** lesdits moyens de pilotage (20) comprennent au moins un capteur de débit (26, 27) agencé le long de ladite première conduite d'alimentation (3) et/ou de ladite seconde conduite d'alimentation (6), en amont respectivement desdits premiers moyens de vanne (4) et/ou desdits seconds moyens de vanne (7), capable de mesurer au moins une valeur d'écoulement (28), et **en ce que** ledit circuit de commande (22) comprend au moins une conduite de rétroaction (29) connectée audit capteur de débit (26, 27).

6. Dispositif (1) selon la revendication 5, **caractérisé en ce que** ledit capteur de débit (26, 27) est du type sans déplacement.

7. Dispositif (1) selon l'une ou plusieurs des revendications précédentes, **caractérisé en ce qu'**au moins l'un desdits premiers et seconds moyens de commande (5, 8) comprend au moins une bobine de commande (18) connectée opérationnellement à la sortie desdits moyens de génération (21, 22) et à au moins l'un desdits premiers et seconds moyens de vanne (4, 7), ladite au moins une bobine de commande (18) étant capable d'actionner l'un desdits premiers et seconds moyens de vanne (4, 7) à chaque impulsion dudit signal de pilotage impulsif (23).

8. Dispositif (1) selon l'une ou plusieurs des revendications précédentes, **caractérisé en ce qu'**au moins l'un desdits premiers et seconds moyens de vanne (4, 7) comprend un corps (10) qui définit une chambre de réception (11) du fluide relatif ayant au moins un orifice d'admission (12) et au moins un orifice de refoulement (13), et **en ce qu'**il comprend au moins un volet (14) mobile pour mettre en communication l'un avec l'autre/isoler ledit orifice d'admission (12) et ledit orifice de refoulement (13).

9. Dispositif (1) selon la revendication 8, **caractérisé en ce que** ledit volet (14) a une surface de butée de forme sensiblement annulaire et capable de reposer sur ledit corps (10) au niveau dudit orifice de refoulement (13) pour obstruer l'écoulement du fluide.

10. Dispositif (1) selon la revendication 9, **caractérisé en ce que** ledit orifice de refoulement (13) a une forme sensiblement circulaire et **en ce que** ladite surface de butée est capable de reposer sur ledit corps (10) au niveau du bord périphérique de l'orifice de refoulement lui-même (13).

11. Dispositif (1) selon la revendication 9, **caractérisé en ce que** ledit orifice de refoulement (13) a une forme sensiblement annulaire, ladite surface de butée étant capable de buter au niveau de l'orifice de refoulement (13) lui-même, et **en ce que** ledit volet (14) est creux à l'intérieur et a au moins une ouverture (15) pour l'écoulement au travers du fluide relatif.

12. Dispositif (1) selon l'une ou plusieurs des revendications 8 à 11 précédentes, **caractérisé en ce que** ledit corps (10) définit au moins un canal de refoulement (16) pour le fluide qui s'étend depuis ledit orifice de refoulement (13) et qui est formé sensiblement sous forme de tube Venturi.

13. Dispositif (1) selon l'une ou plusieurs des revendications 8 à 12 précédentes, **caractérisé en ce qu'**au moins l'un desdits premiers et seconds moyens de vanne (4, 7) comprend au moins un élément d'étanchéité (17) capable de séparer hydrauliquement les moyens de commande (5, 8) relatifs de la chambre de réception (11) relative.

14. Dispositif (1) selon l'une ou plusieurs des revendications 8 à 13 précédentes, **caractérisé en ce que** lesdits moyens de commande (5, 8) sont configurés pour être commandés entre une configuration active, dans laquelle ils sont capables de générer un champ magnétique pour attirer ledit volet (14) vers la position d'ouverture, et une position de repos, dans laquelle ils interrompent ledit champ magnétique et comprennent des moyens de retour (19) capables de contrer le déplacement du volet (14) lui-même vers la position d'ouverture relative.
